# FASCICULE DE BREVET EUROPEEN

(11) **EP 3 346 833 B1**
(45) Date de publication et mention de la délivrance du brevet: **14.12.2022**
(21) Numéro de dépôt: 16777718.4
(22) Date de dépôt: 09.09.2016
(51) Int. Cl.: A01N 1/02

(54) **UTILISATION DE MILIEU DE CONSERVATION INJECTABLE POUR LA CONSERVATION DE CELLULES DU SANG PLACENTAIRE, DE LA MOELLE OSSEUSE ET DU SANG PÉRIPHÉRIQUE**
VERWENDUNG VOM INJIZIERBAREN KONSERVIERUNGSMEDIUM ZUR KONSERVIERUNG VON ZELLEN AUS PLAZENTALEM BLUT, AUS KNOCHENMARK UND AUS PERIPHEREM BLUT
USE OF INJECTABLE PRESERVING MEDIUM FOR PRESERVING CELLS FROM PLACENTAL BLOOD, FROM BONE MARROW AND FROM PERIPHERAL BLOOD

(30) Priorité: 10.09.2015 FR 1558409
(43) Date de publication de la demande: 18.07.2018
(73) Titulaire: Etablissement français du sang, 93218 La Plaine Saint Denis Cedex (FR); Université de Bordeaux, 33000 Bordeaux (FR); Centre national de la recherche scientifique, 75016 Paris (FR)
(72) Inventeur: IVANOVIC, Zoran, 33700 Merignac (FR); CHEVALEYRE, Jean, 33600 Pessac (FR); RODRIGUEZ, Laura, F-33140 Villenave d'Ornon (FR); ATTEBI, Esther, F-33200 Bordeaux (FR)
(74) Mandataire: Cabinet Becker et Associés
(86) Numéro de dépôt international: PCT/FR2016/052253
(87) Numéro de publication internationale: WO 2017/042501

(56) Documents cités:
- WO-A1-01/52647
- WO-A1-02/35929
- WO-A1-95/29230
- WO-A1-97/41848
- WO-A2-2008/131973

## Description

### Domaine de l'invention

La présente invention est relative au domaine médical, et en particulier aux milieux de conservation de cellules du sang placentaire, de la moelle osseuse et du sang périphérique.

### Contexte de l'invention

Les cellules souches du sang placentaire représentent une alternative à la greffe de moelle osseuse. Les malades ne disposant pas de donneur compatible apparenté ou inscrit sur le fichier national des donneurs de moelle osseuse peuvent alors bénéficier de la greffe d'une ou deux unités de sang placentaire. L'intérêt de cette alternative est que ces cellules permettent ainsi de se soustraire à l'obligation d'un très haut niveau de compatibilité HLA entre le malade et les cellules du greffon.

Entre les étapes de prélèvement des unités de sang placentaire et leur congélation, les recommandations en vigueur stipulent un délai de seulement 24 heures car la viabilité et la fonctionnalité des cellules souches et des progéniteurs diminuent à 4°C. La prolongation de ce délai permettrait de prélever des unités de sang placentaire le week-end mais également d'allonger la distance entre le lieu de prélèvement et le lieu de stockage.

En outre, l'amplification ex vivo des cellules CD34+, en particulier celles de sang placentaire, a été mise au point ces 15 dernières années (Duchez et al, 2003, J Hematother Stem Cell Res, 12, 587-9 ; Duchez et al, 2012, Cell Transplant, 21, 2517-21 ; Ivanovic et al, 2004, Stem Cells, 22, 716-24; Ivanovic et al, 2006, Transfusion, 46, 126-31; Ivanovic et al, 2011, Cell Transplant, 20, 1453-63 ; Polini et al, 1997, hematol Cell Ther, 39, 49-58; Boiron et al, 2006, Transfusion, 46, 1934-42 ; Milpied et al, 2009, ASH Meeting abstracts, Blood, 114, Abst 502, p 207). Elle permet de constituer des greffons hématopoïétiques ayant deux avantages : maintenir le potentiel de greffe à long terme et diminuer la période d'aplasie post conditionnement.

La phase clinique du protocole GRAPA (Greffe Allogénique de Progéniteurs Amplifiés) d'expansion ex vivo des cellules CD34+ de sang placentaire a montré l'intérêt thérapeutique de cette technologie qui permet une régénération à long terme des cellules médullaires tout en raccourcissant la période d'aplasie post greffe (Milpied et al, *supra*)*.*

Cependant, en vue de la préparation des greffons, les cellules contenues dans un milieu de conservation ou de culture non injectable sont lavées puis ressuspendues dans une solution d'albumine humaine 4% pour être injectées aux patients dans les 6 heures, ce qui permet uniquement un transport à faible distance (moins de 50 kilomètres). Les périodes plus longues sont associées à une perte importante de la fonctionnalité des progéniteurs engagés et des CSH (Duchez et al, 2013, Cell Transplant, 22, 1501-6).

Des études ont montré la possibilité de préserver correctement ces cellules après culture pendant 48 h à +4°C dans un milieu de conservation (milieu HP02. Macopharma) non injectable à l'homme (Duchez et al, *supra).* A la connaissance des inventeurs, c'est le seul milieu actuellement connu présentant une telle capacité. Cependant, ce milieu est non injectable et un lavage est nécessaire avant la greffe.

Des solutions de conservations ont été envisagées pour conserver différents types de cellules et d'organes (voir par exemple les demandes de brevet WO 02/35929, WO 95/29230, WO 97/41848, WO 01/52647 et WO 2008/131973).

La plupart des solutions de préservation des cellules humaines ou d'organes ne sont pas injectables car elles contiennent des molécules non inscrites au Codex. Ces molécules ne sont pas inscrites parce qu'elles n'ont pas d'intérêt thérapeutique, qu'elles n'intéressent pas de fournisseurs pharmaceutiques ou encore qu'elles présentent une toxicité pour les patients. Par exemple et de manière non-exhaustive, les milieux comprennent du polyéthylène glycol, du Trolox (acide 6-hydroxy-2,5,7,8-tétraméthylchroman-2-carboxylique), de l'érythorbate de sodium, du glutathion, une superoxyde dismutase, une catalase, un polyoside sélectionné parmi le lactobionate, le saccharose, le raffinose et le tréhalose, un tampon phosphate (en particulier Na₂PO₄, K₂PO₄, NaHPO₄, ou KHPO₄), du tampon HEPES et le cétoglutarate.

La mise en place de pôles de compétence régionaux, nationaux ou à fortiori internationaux pour ce type de production et/ou de stockage cellulaire nécessite de pouvoir transporter sur de longues distances, à l'intérieur de l'Europe ou même sur d'autres continents, ces greffons correctement préservés puis de les injecter sans avoir à les laver. En effet, le lavage implique des manipulations relativement longues nécessitant du matériel et du personnel dédiés.

Dans ce contexte, il est donc nécessite de disposer d'un milieu de préservation injectable.

### Résumé de l'invention

L'invention est exposée dans le jeu de revendications joint.

Le présent document décrit une solution de conservation qui est injectable et présente de bonnes qualités de préservation des cellules et de leur fonctionnalité et ce, pendant au moins 48 h.

Ainsi, il décrit une solution injectable pour conserver des cellules du sang placentaire, de la moelle osseuse et du sang périphérique, la solution comprenant une solution physiologique de chlorure de sodium, du chlorure de potassium, du sulfate de magnésium, du bicarbonate de sodium, de la vitamine E et/ou A, et de l'albumine humaine. De préférence, elle comprend au minimum 5 g/l d'albumine humaine et au minimum 0,0000255 g/l de vitamine E et/ou au minimum 0,0000026 g/l de vitamine A.

Facultativement, la solution peut comprendre en outre du lactate et de la vitamine C. Dans ce mode de réalisation, elle contient au minimum 0,0003125 g/l de vitamine C.

La solution peut également comprendre en outre un ou plusieurs éléments choisis parmi des acides aminés dont la glutamine, du glucose, du mannitol, et de l'acide citrique.

De préférence, la solution injectable comprend ou consiste essentiellement en une solution physiologique de chlorure de sodium, d'albumine humaine, des vitamines E, C et A, des acides aminés dont la glutamine, des ions potassium et magnésium, du glucose, du mannitol, du lactate, du bicarbonate de sodium et de l'acide citrique.

Le présent document décrit également un kit comprenant la solution de conservation injectable telle que décrit dans ce document et un conteneur stérile destiné à recevoir des cellules de sang placentaire, de moelle osseuse et de sang périphérique.

Ce document décrit en outre un conteneur stérile destiné à recevoir des cellules de sang placentaire, de moelle osseuse et de sang périphérique comprenant la solution de conservation injectable telle que décrit dans ce document. Eventuellement, le conteneur peut comprendre en outre des cellules du sang placentaire, de la moelle osseuse et du sang périphérique. De préférence, les cellules comprennent des cellules CD34⁺.

La présente invention est relative à l'utilisation d'une solution injectable comprenant une solution physiologique de chlorure de sodium, du chlorure de potassium, du sulfate de magnésium, du bicarbonate de sodium, de la vitamine E, de la vitamine A, de la vitamine C, du lactate, et de l'albumine humaine et étant adaptée pour que les cellules à conserver puissent être transplantées à un patient sans rinçage préalable, pour conserver des cellules du sang placentaire, de la moelle osseuse et du sang périphérique, de préférence en hypothermie modérée, notamment à 4 °C. De préférence, les cellules comprennent des cellules CD34⁺.

Enfin, la présente invention concerne une méthode de conservation des cellules du sang placentaire, de la moelle osseuse et du sang périphérique, comprenant la mise en contact des cellules du sang placentaire, de la moelle osseuse et du sang périphérique avec une solution injectable comprenant une solution physiologique de chlorure de sodium, du chlorure de potassium, du sulfate de magnésium, du bicarbonate de sodium, de la vitamine E, de la vitamine A, de la vitamine C, du lactate, et de l'albumine humaine et étant adaptée pour que les cellules à conserver puissent être transplantées à un patient sans rinçage préalable. De préférence, les cellules comprennent des cellules CD34⁺.

### Description détaillée de l'invention

Le présent document décrit une solution de conservation de cellules du sang placentaire, de la moelle osseuse et du sang périphérique, cette solution de conservation étant injectable. Les cellules de sang placentaire, de la moelle osseuse et de sang périphérique peuvent être natives (après leur prélèvement), décongelées ou amplifiées ex vivo. Ainsi, par « solution injectable pour conserver des cellules du sang placentaire, de la moelle osseuse et du sang périphérique » est entendu que la solution est adaptée à une injection et adaptée à la conservation desdites cellules.

Par « injectable » est entendu dans la présente demande que la solution de conservation est adaptée à une injection (par exemple par intraveineuse, intramusculaire, sous-cutanée, etc...) à un humain, sans rinçage préalable des cellules. Ainsi, la solution ne comprend que des éléments admis ou homologués comme « injectable » par les administrations d'autorisation de médicament comme le FDA (Food and Drug Administration), l'Agence européenne des médicaments (EMA) ou l'Agence nationale de sécurité du médicament et des produits de santé (ANSM). Ainsi, elle ne comprend aucun élément non-admis ou non-homologué comme « injectable » par les administrations d'autorisation de médicament comme le FDA (Food and Drug Administration), l'Agence européenne des médicaments (EMA) ou l'Agence nationale de sécurité du médicament et des produits de santé (ANSM). Notamment, le dictionnaire VIDAL^{®} (édition 2015) peut être consulté pour déterminer si un élément est homologué ou admis comme « injectable ».

Le milieu de référence utilisé pour la mise au point de la solution de conservation injectable selon la présente invention est le milieu HP02 de Maco Pharma (également appelé MC01). La composition de ce milieu est secrète. Cependant, la demande de brevet WO2014/057220 décrit des éléments le composant (page 13, ligne 25 - page 14, ligne 4). Ce milieu est clairement non-injectable. Notamment, il comprend du tampon HEPES et du pyruvate de sodium, tous deux non-homologués comme injectables.

Le milieu de conservation tel que décrit ici présente une efficacité de conservation équivalente à ce milieu de référence HP02, tout en étant injectable. Notamment, il permet une conservation pendant au moins 48 h à 4°C, et même de 72 h, en maintenant une viabilité et une fonctionnalité des cellules souches et progénitrices compatibles avec un usage thérapeutique.

La solution de conservation telle que décrite ici comprend une solution physiologique (en particulier de chlorure de sodium), de l'albumine humaine et de la vitamine E. Alternativement, elle comprend une solution physiologique (en particulier de chlorure de sodium), de l'albumine humaine et de la vitamine A, cette dernière présentant un rôle proche de celui de la vitamine E.

L'albumine humaine présente un rôle important pour son rôle de stabilisation du milieu, notamment dans des conditions de vieillissement accéléré à 37°C. L'albumine humaine est disponible commercialement en qualité injectable, notamment par la société Baxter ou sous les dénominations Albunorm^{®}, Flexbumin^{®}, Vialebex^{®} ou Ydralbum^{®}. La solution comprend au minimum 1 g/l d'albumine, et de préférence au moins 5, 10 ou 15 g/l. La quantité d'albumine humaine dans la solution peut être comprise entre 1 et 100 g/l de solution, de préférence entre 5 et 40 g/l de solution, de manière encore plus préférée entre 5 et 20 g/l, et tout particulièrement 15 g/l de solution. Exprimé autrement, la solution comprend de 0,1 à 10 % d'albumine humaine, de préférence de 0,5 à 4%, de manière encore plus préférée de 0,5 à 2%, et tout particulièrement 1,5 %.

La solution comprend également de la vitamine E et ou de la vitamine A. De préférence, la solution comprend au minimum de la vitamine E. De manière tout à fait surprenante, les inventeurs ont en effet découvert que la vitamine E (alpha-tocophérol) a un effet très important sur la préservation des cellules, en particulier sur leur fonctionnalité. La vitamine E a même été identifiée par les inventeurs comme l'élément qui a l'action la plus importante. La solution comprend au minimum 0,0000255 g/l de vitamine E. La quantité de vitamine E dans la solution peut notamment être comprise entre 0,0001 et 0,01 g/l de solution, de préférence entre 0,001 et 0,006 g/l de solution, et tout particulièrement 0,004 g/l de solution. Ce produit est disponible commercialement en qualité injectable, notamment par la société Nepalm.

De préférence, la solution comprend en outre de la vitamine C. La solution comprend alors au minimum 0.000312 g/ de vitamine C. La quantité de vitamine C dans la solution est comprise entre 0,0005 et 0,15 g/l de solution, de préférence entre 0,001 et 0,1 g/l de solution, et tout particulièrement 0,05 g/l de solution. Ce produit est disponible commercialement en qualité injectable, notamment sous forme de Vitamine C Aguettant.

De préférence, la solution comprend en outre de la vitamine A. La solution comprend alors au minimum 0,0000026 g/l de vitamine A. La quantité de vitamine A dans la solution est comprise entre 0,0001 et 0,001 g/l de solution, de préférence entre 0,0002 et 0,0008 g/l de solution, et tout particulièrement 0,0004 g/l de solution. Ce produit est disponible commercialement en qualité injectable, notamment par la société Nepalm.

Selon un aspect particulier, la solution comprend des vitamines E et C, des vitamines E et A, ou des vitamines E, C et A. Notamment, les vitamines peuvent être apportées à la solution telle que décrite ici par l'ajout d'un cocktail de vitamines disponible commercialement et adapté à une injection. Par exemple et de manière non-exhaustive, le cocktail de vitamines peut être le Cervenit^{®} de Baxter qui comprend du palmitate de rétinol, du cholécalciférol, de l'alpha-tocophérol, de l'acide ascorbique, de la thiamine, de la riboflavine, de la pyridoxine, de la cyanocobalamine, de l'acide folique, de l'acide pantothénique, de la biotine et du nicotinamide ; ou le Vitalipide^{®} de Fresenius Kabi qui comprend du palmitate de rétinol, de l'alpha-tocophérol, de la vitamine D2 et de la vitamine K1.

La solution physiologique est classiquement une solution de chlorure de sodium, en particulier à 0,9%. Celui-ci est présent dans la solution dans des quantités physiologiquement acceptables. De préférence, le chlorure de sodium peut être contenu en une quantité comprise entre 5 et 7 g/l, et de préférence environ 6 g/l.

De préférence, la solution selon la présente invention comprend en outre des ions potassium (K⁺) et magnésium (Mg²⁺), de préférence en quantité physiologique. Notamment, la solution comprend du chlorure de potassium, de préférence en quantité physiologique (c'est-à-dire environ 0,33 g/l). Elle comprend également du sulfate de magnésium, de préférence en quantité comprise entre 0,01 et 3 g/l, de préférence entre 0,05 et 2,4 g/l, notamment environ 0,1 g/l. La solution peut également comprendre en outre des ions calcium.

La solution de conservation telle que décrite ici peut comprendre en outre du bicarbonate de sodium. De préférence, il est contenu dans la solution en une quantité comprise entre 0,1 et 4,5 g/l, de préférence entre 0,25 et 4,15 g/l, et notamment environ 0,52 g/l. Ce produit est disponible commercialement en qualité injectable.

La solution de conservation telle que décrite ici peut comprendre en outre du lactate, en particulier du Ringer lactate. Ce produit est disponible commercialement en qualité injectable, notamment par les sociétés Macopharma, Fresenius Kabi ou Baxter. Le Ringer lactate est présent dans la solution de sorte que le lactate de sodium soit compris entre 0,1 et 3 g/l, de préférence 0,2 et 2,7 g/l, et notamment environ 0,7 g/l.

La solution de conservation telle que décrite ici peut comprendre en outre de l'acide citrique, en particulier de l'ACD A (Acide citrique, Citrate, Dextrose, solution A).

De préférence, la solution telle que décrite ici comprend en outre des acides aminés. Les acides aminés peuvent être présents en des quantités comprises entre 1 et 4 g/l, de préférence entre 1,3 et 3,3 g/l, notamment environ 2 g/l. Plusieurs cocktails d'acides aminés sont disponibles commercialement en qualité injectable, par exemple Vaminolact^{®} de Fresenius Kabi. Parmi les acides aminés, il est intéressant que la solution contienne de la glutamine, notamment en des quantités de glutamine comprises entre 0,2 et 0,8 g/l, de préférence entre 0,3 et 0,7 g/l, et notamment environ 0,7 g/l. L'apport en glutamine peut être réalisé grâce à des produits commercialement disponibles pour l'injection telle que le Dipeptiven^{®} de Fresenius Kabi.

La solution de conservation telle que décrite ici peut comprendre en outre du glucose. Il est classiquement utilisé en une quantité d'environ 1 g/l.

La solution de conservation telle que décrite ici peut comprendre en outre du mannitol. Par exemple, le mannitol peut être compris entre 1 et 25 g/l, de préférence entre 5 et 20 g/l, et notamment environ 5 g/l.

Ainsi, selon des aspects alternatifs, la solution de conservation injectable telle que décrite ici comprend ou consiste essentiellement en :
- une solution physiologique de chlorure de sodium, du chlorure de potassium, du sulfate de magnésium, du bicarbonate de sodium, de l'albumine humaine et de la vitamine E ;
- une solution physiologique de chlorure de sodium, du chlorure de potassium, du sulfate de magnésium, du bicarbonate de sodium, de l'albumine humaine et de la vitamine A ;
- une solution physiologique de chlorure de sodium, du chlorure de potassium, du sulfate de magnésium, du bicarbonate de sodium, de l'albumine humaine et des vitamines E et C ;
- une solution physiologique de chlorure de sodium, du chlorure de potassium, du sulfate de magnésium, du bicarbonate de sodium, de l'albumine humaine et des vitamines A et C ;
- une solution physiologique de chlorure de sodium, du chlorure de potassium, du sulfate de magnésium, du bicarbonate de sodium, de l'albumine humaine et des vitamines E et A;
- une solution physiologique de chlorure de sodium, du chlorure de potassium, du sulfate de magnésium, du bicarbonate de sodium, de l'albumine humaine et des vitamines E, C et A ;
- une solution physiologique de chlorure de sodium, du chlorure de potassium, du sulfate de magnésium, du bicarbonate de sodium, de l'albumine humaine, de la vitamine E et un ou plusieurs composants choisis dans le groupe consistant en du lactate, des acides aminés dont de la glutamine, du glucose, du mannitol, et de l'acide citrique ;
- une solution physiologique de chlorure de sodium, du chlorure de potassium, du sulfate de magnésium, du bicarbonate de sodium, de l'albumine humaine, de la vitamine A et un ou plusieurs composants choisis dans le groupe consistant en du lactate, des acides aminés dont de la glutamine, du glucose, du mannitol, et de l'acide citrique;
- une solution physiologique de chlorure de sodium, du chlorure de potassium, du sulfate de magnésium, du bicarbonate de sodium, de l'albumine humaine, des vitamines E et C, et un ou plusieurs composants choisis dans le groupe consistant en du lactate, des acides aminés dont de la glutamine, du glucose, du mannitol, et de l'acide citrique;
- une solution physiologique de chlorure de sodium, du chlorure de potassium, du sulfate de magnésium, du bicarbonate de sodium, de l'albumine humaine, des vitamines A et C, et un ou plusieurs composants choisis dans le groupe consistant en du lactate, des acides aminés dont de la glutamine, du glucose, du mannitol, et de l'acide citrique;
- une solution physiologique de chlorure de sodium, du chlorure de potassium, du sulfate de magnésium, du bicarbonate de sodium, de l'albumine humaine, des vitamines E et A, et un ou plusieurs composants choisis dans le groupe consistant en du lactate, des acides aminés dont de la glutamine, du glucose, du mannitol, et de l'acide citrique;
- une solution physiologique de chlorure de sodium, du chlorure de potassium, du sulfate de magnésium, du bicarbonate de sodium, de l'albumine humaine et des vitamines E, C et A, et un ou plusieurs composants choisis dans le groupe consistant en du lactate, des acides aminés dont de la glutamine, du glucose, du mannitol, et de l'acide citrique.

De préférence, chaque composant est présent dans les quantités indiquées dans le tableau ci-dessous.

**Tableau 1**

| Composant/Quantité | (g/l solution) | | |
|---|---|---|---|
| | Minimum | Maximum | Préférée |
| Albumine | 5 | 40 | 15 |
| Vitamine E | 0,0000255 | 0,01 | 0,004 |
| Vitamine C | 0,0003125 | 0,1 | 0,05 |
| Vitamine A | 0,0000026 | 0,001 | 0,0005 |
| | | | |
| Glucose | 1 | 1 | 1 |
| Mannitol | 1 | 20 | 5 |
| Acides aminés | 1 | 4 | 1,5-2,5 |
| Dont glutamine | 0,1 | 1 | 0,4-0,7 |
| Bicarbonate de sodium | 0,1 | 5 | 0,5-0,6 |
| Chlorure de potassium | Physiologique (0,33) | | 0,33 |
| Chlorure de sodium | Physiologique (6) | | 6 |
| Sulfate de Magnésium | 0,05 | 2,35 | 0,1 |
| Lactate de sodium | 0,1 | 3 | 0,7 |
| Ions citrates | 0.019 | 0.57 | 0.057 |

Par « consiste essentiellement en » est entendu que la solution peut comprendre des composants autres que ceux listés, mais en quantité inférieure à 10% en poids, de préférence inférieure à 5, 4, 3, 2 ou 1 %. Il est entendu que ces autres composants sont compatibles avec une injection.

Selon un aspect tout particulièrement préféré, la solution de conservation telle que décrite ici comprend de l'albumine humaine, des acides aminés, du chlorure de potassium, du glucose, de la glutamine, du sulfate de magnésium, des vitamines E, C et A, du mannitol, du lactate, de préférence Ringer lactacte, du chlorure de sodium, du bicarbonate de sodium et de l'acide citrique, en particulier sous forme d'ACD A.

Par « environ » est entendu plus ou moins 10 %, de préférence plus ou moins 5%. Par exemple, environ 10 signifie entre 9 et 11, et de préférence entre 9,5 et 10,5.

Ainsi, le milieu de conservation tel que décrit ici, pour pouvoir être injectable, ne contient pas d'élément non-autorisé par les agences d'administration de médicaments, en particulier la FDA, l'ANSM et l'EMA. En particulier, la solution de conservation telle que décrite ici ne contient pas un ou plusieurs éléments sélectionnés parmi le groupe consistant en le polyéthylène glycol, de Trolox (acide 6-hydroxy-2,5,7,8-tétraméthylchroman-2-carboxylique), l'érythorbate de sodium, le glutathion, une superoxyde dismutase, une catalase, un polyoside en particulier sélectionné parmi le lactobionate, le saccharose, le raffinose et le tréhalose, un tampon phosphate (en particulier Na₂PO₄, K₂PO₄, NaHPO₄, ou KHPO₄), et le cétoglutarate. Selon un aspect préféré, la solution ne comprend aucun des éléments de cette liste. Selon un aspect préféré, la solution injectable de conservation telle que décrite ici ne comprend pas de rouge de phénol, de gluconate de fer, d'insuline humaine et/ou de nucléosides. Selon un aspect préféré, le milieu de conservation tel que décrit ici ne comprend pas de composé vanadium tel que l'oxovanadium, bis (maltolato) oxovanadium et l'orthovanadium.

La présente invention est donc relative à l'utilisation de la solution de conservation injectable telle que décrite ici, ladite solution injectable comprenant une solution physiologique de chlorure de sodium, du chlorure de potassium, du sulfate de magnésium, du bicarbonate de sodium, de la vitamine E, de la vitamine A, de la vitamine C, du lactate, et de l'albumine humaine et étant adaptée pour que les cellules à conserver puissent être transplantées à un patient sans rinçage préalable, pour conserver des cellules de sang placentaire, de moelle osseuse et de sang périphérique, en particulier des cellules CD34⁺.

Le présent document décrit également un kit comprenant la solution de conservation injectable telle que décrite ici et un conteneur stérile destiné à recevoir des cellules de sang placentaire, de moelle osseuse et de sang périphérique, en particulier des cellules CD34⁺. Il décrit également un conteneur stérile destiné à recevoir des cellules de sang placentaire, de moelle osseuse et de sang périphérique contenant la solution de conservation injectable telle que décrite ici. Il décrit enfin l'utilisation d'un kit ou d'un conteneur contenant la solution de conservation injectable telle que décrite ici pour conserver des cellules de sang placentaire, de moelle osseuse et de sang périphérique, en particulier des cellules CD34⁺.

Le conteneur stérile est réalisé avec un film barrière à l'air et/ou arrangé dans un emballage réalisé avec un film barrière à l'air. Le film barrière à l'air est un film barrière à l'oxygène ou barrière à l'oxygène et au dioxyde de carbone. Le film peut être réalisé en PVC (polychlorure de vinyl). Il peut alternativement comprendre un copolymère d'éthylène-alcool vinylique (EVOH), un copolymère de chlorure de vinylidène, l'alcool polyvinylique, le polyacrylonitrile, un copolymère d'éthylène vinylacétate (EVA) ou le polyamide. Selon un aspect préféré, le conteneur est réalisé avec un film comprenant de l'EVA ou du PVC. En particulier, le film barrière à l'air possède une structure multicouche telle qu'une structure tri-couche dont la couche centrale est en matière barrière à l'air. La couche centrale est prise en sandwich entre deux couches d'une autre matière telle qu'une polyoléfine, notamment le polyéthylène, le polypropylène ou un copolymère d'éthylène-oléfine. Par exemple, le film est un film tricouche en éthylène-acétate de vinyle / éthylène-alcool vinylique / éthylène-acétate de vinyle (EVA/EVOH/EVA).

La présente invention est également relative à une méthode de conservation des cellules de sang placentaire, de moelle osseuse et de sang périphérique comprenant la mise en contact de ces cellules avec la solution de conservation injectable telle que décrite ici, ladite solution injectable comprenant une solution physiologique de chlorure de sodium, du chlorure de potassium, du sulfate de magnésium, du bicarbonate de sodium, de la vitamine E, de la vitamine A, de la vitamine C, du lactate, et de l'albumine humaine et étant adaptée pour que les cellules à conserver puissent être transplantées à un patient sans rinçage préalable. De préférence, les cellules comprennent des cellules CD34⁺. Elle est également relative à une méthode de conservation des cellules CD34⁺ comprenant la mise en contact de ces cellules avec la solution de conservation injectable telle que décrite ici, ladite solution injectable comprenant une solution physiologique de chlorure de sodium, du chlorure de potassium, du sulfate de magnésium, du bicarbonate de sodium, de la vitamine E, de la vitamine A, de la vitamine C, du lactate, et de l'albumine humaine et étant adaptée pour que les cellules à conserver puissent être transplantées à un patient sans rinçage préalable.

De préférence, la solution de conservation est mise en contact avec les cellules avec un ratio volumique compris entre 1: 0,5 et 1: 2. Ce ratio est en particulier pertinent pour les prélèvements de sang placentaire, de moelle osseuse et de sang périphérique. Par contre, en ce qui concerne les cellules mononuclées, les cellules CD34+ fraiches ou décongelées, notamment celles sélectionnées à partir des prélèvements de sang placentaire, de moelle osseuse et de sang périphérique, ainsi que les cellules obtenues après amplifications ex vivo, elles sont remises en suspension dans la solution de conservation à des concentrations cellulaires variables selon les protocoles et les nécessités.

De préférence, les cellules sont stockées à une température comprise entre 0°C et 10°C et de préférence d'environ 4 °C.

Le présent document décrit également un conteneur stérile destiné à recevoir des cellules de sang placentaire, de moelle osseuse et de sang périphérique contenant la solution de conservation injectable telle que décrite ici et les cellules de sang placentaire, de moelle osseuse et de sang périphérique. De préférence, les cellules comprennent des cellules CD34⁺. Il décrit également un conteneur stérile destiné à recevoir des cellules CD34⁺ contenant la solution de conservation injectable telle que décrite ici et des cellules CD34⁺. Ainsi, le conteneur peut être éventuellement considéré comme contenant un greffon prêt pour une injection.

De préférence, les cellules sont des cellules de mammifère, et de manière tout particulièrement préférée, des cellules humaines. En particulier, les cellules ne sont pas des cellules humaines embryonnaires.

Les cellules à conserver sont des cellules telles que collectées ou éventuellement telles qu'obtenues après expansion *ex vivo.* Les cellules d'intérêt particulier sont les cellules CD34+, et plus spécifiquement les cellules souches hématopoïétiques et les cellules progénitrices.

Dans un mode de réalisation préféré, les cellules à conserver sont des cellules de sang placentaire.

Les cellules à conserver peuvent être des cellules directement prélevées, des cellules obtenues par amplification cellulaire *ex vivo,* ou des cellules qui ont été congelées.

Selon un mode de réalisation préférée, les cellules sont des cellules destinées à être transplantées chez un receveur et sont de préférence issues d'un prélèvement chez un donneur. Le donneur et le receveur peuvent être le même individu (greffe autologue) ou des individus différents (greffe allogénique).

Le présent document décrit également un greffon comprenant des cellules destinées à être transplantées et la solution de conservation injectable telle que décrite ici. De préférence, les cellules destinées à être transplantées sont des cellules du sang placentaire, de la moelle osseuse et du sang périphérique. En particulier, les cellules comprennent des cellules CD34⁺.

D'autres caractéristiques et avantages de l'invention apparaîtront mieux à la lecture des exemples suivants donnés à titre illustratif et non limitatif.

### Description des figures

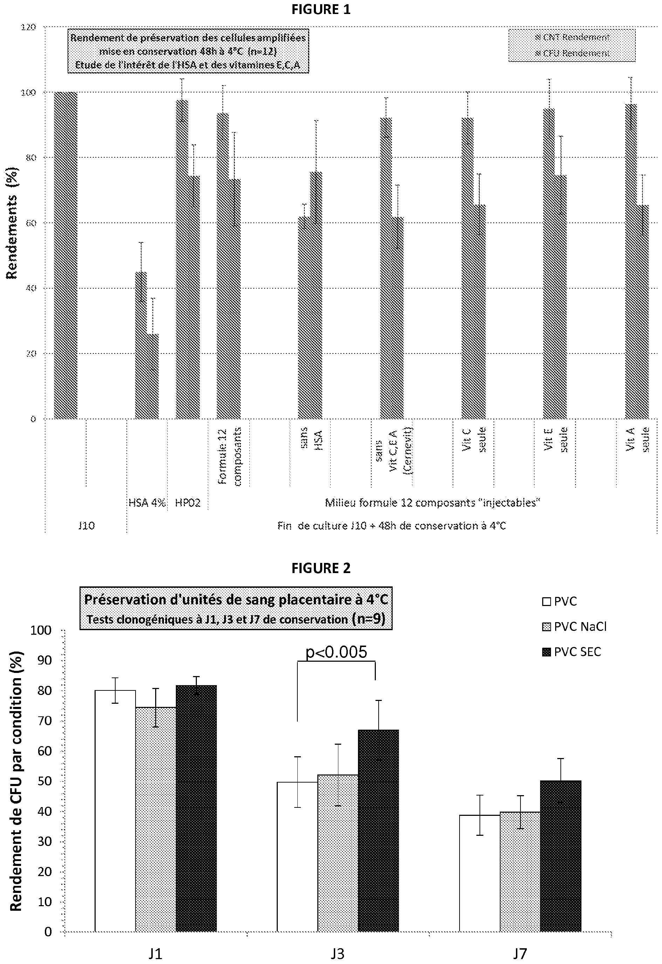

Figure 1. Rendement de préservation des cellules CD34⁺ de sang placentaire amplifiés, mise en conservation 48 h à 4°C(n=12). Pour chaque condition, à gauche, le rendement CNT (cellules nucléées viables) et à droite le rendement CFU (colony forming unit) permettant d'évaluer la fonctionnalité clonogénique. Les conditions testées sont les suivantes : J10 (en fin de culture), HSA 4% (milieu comprenant de l'albumine sérique humaine à 4 %), HP02 (milieu de référence de Maco Pharma), Formule 12 composants (telle que décrite dans les exemples dans le tableau 2), sans HSA (milieu Formule 12 sans l'albumine sérique humaine), sans Vit C,E,A (Cernevit^{®}) (milieu Formule 12 sans le Cernevit^{®}), vit C seule (milieu Formule 12 sans le Cernevit^{®} et avec la vitamine C), vit E seule (milieu Formule 12 sans le Cernevit^{®} et avec la vitamine E), et vit A seule (milieu Formule 12 sans le Cernevit^{®} et avec la vitamine A). En dehors de J10, les autres mesures ont été faites après 48 h de conservation des cellules à 4°C. Les essais ont été réalisés dans des contenants imperméables aux gaz (tubes en polypropylène de 2.5ml de contenance avec 2.5 ml de suspension cellulaire pour éviter au maximum la présence d'air).
Figure 2. Préservation d'unités de sang placentaire après prélèvement, CFU (n=9). J1, J3 et J7 correspondent respectivement à une conservation d'1, 3 ou 7 jours à 4 °C. PVC correspond à un stockage dans une poche PVC, PVC NaCl comprend l'ajout chlorure de sodium 0,9 %, PVC SEC comprend l'ajout du milieu SEC tel que décrit dans les exemples dans le tableau 2.

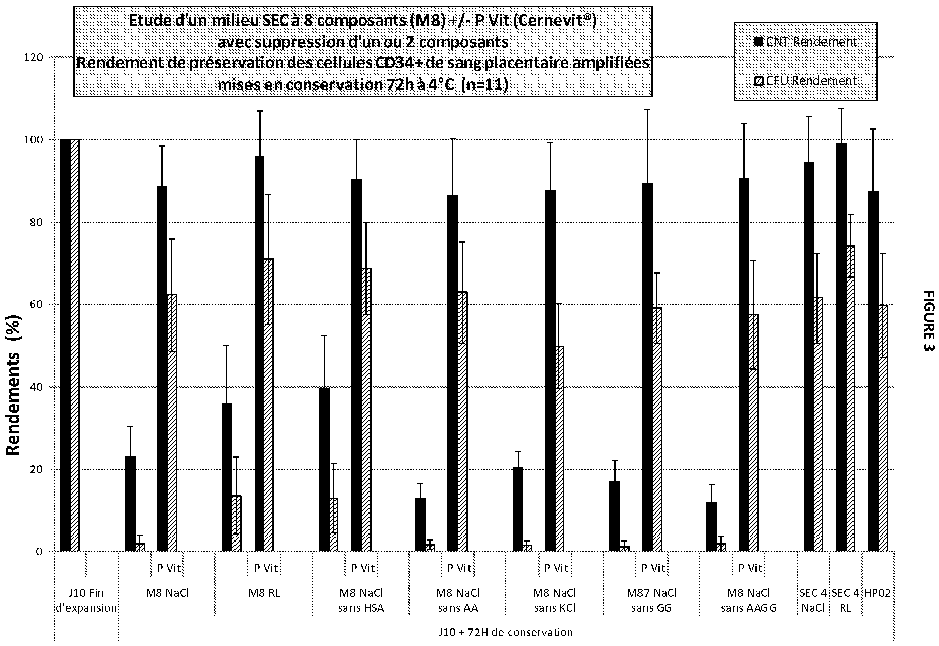

Figure 3. Rendement de préservation des cellules CD34⁺ de sang placentaire amplifiés, mise en conservation 72 h à 4°C(n=11). Pour chaque condition, à gauche, le rendement CNT (cellules nucléées viables) et à droite le rendement CFU (colony forming unit) permettant d'évaluer la fonctionnalité clonogénique. Les conditions testées sont les suivantes : J10 (en fin de culture) ; M8 NaCl (milieu comprenant albumine sérique humaine, acides aminés, chlorure de potassium, glucose, glutamine, bicarbonate de sodium, ACD A et NaCl 0,9 %) sans ou avec ajout de Cernevit^{®} ; M8 RL (milieu comprenant albumine sérique humaine, acides aminés, chlorure de potassium, glucose, glutamine, bicarbonate de sodium, ACD A, et du Ringer Lactate à la place du NaCl 0.9%) sans ou avec ajout de Cernevit^{®} ; M8 NaCl sans HSA (M8 NaCl dénué d'albumine sérique humaine) sans ou avec ajout de Cernevit^{®}; M8 NaCl sans AA (M8 NaCl dénué d'acides aminés) sans ou avec ajout de Cernevit^{®}; M8 NaCl sans KCl (M8 NaCl dénué de KCl) sans ou avec ajout de Cernevit^{®}; M8 NaCl sans GG (M8 NaCl dénué de glucose et de glutamine) sans ou avec ajout de Cernevit^{®}; M8 NaCl sans AAGG (M8 NaCl dénué d'acides aminés, de glucose et de glutamine) sans ou avec ajout de Cernevit^{®}; SEC 4 NaCl (mileu formule 12 composants sans Ringer Lactate ) ; SEC 4 RL (milieu formule 12 composants sans NaCl 0.9%) ; HP02 (milieu de référence de Maco Pharma). Les essais ont été réalisés dans des contenants imperméables aux gaz (tubes en polypropylène de 2.5ml de contenance avec 2.5 ml de suspension cellulaire pour éviter au maximum la présence d'air).

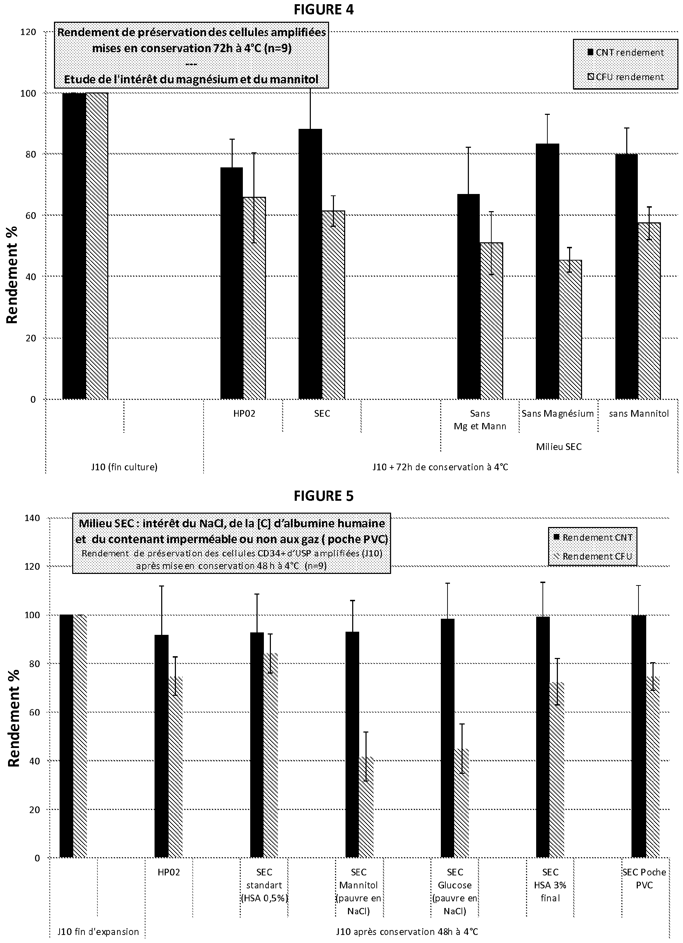

Figure 4. Rendement de préservation des cellules CD34⁺ de sang placentaire amplifiées, mise en conservation 72 h à 4 °C (n=9). Pour chaque condition, à gauche, le rendement CNT (cellules nucléées viables) et à droite le rendement CFU (colony forming unit) permettant d'évaluer la fonctionnalité clonogénique. Les conditions testées sont les suivantes : J10 (en fin de culture) ; HP02 (milieu de référence de Maco Pharma) ; SEC (milieu SEC tel que décrit dans les exemples dans le tableau 2); sans Mg et Mann (milieu SEC mais sans le magnésium et le mannitol) ; sans Magnésium (milieu SEC mais sans le magnésium) ; sans Mannitol (milieu SEC mais sans le mannitol). Les essais ont été réalisés dans des contenants imperméables aux gaz (tubes en polypropylène de 2.5ml de contenance avec 2.5 ml de suspension cellulaire pour éviter au maximum la présence d'air).
Figure 5. Rendement de préservation des cellules CD34⁺ de sang placentaire amplifiées, mise en conservation 48 h à 4 °C (n=9). Pour chaque condition, à gauche, le rendement CNT (cellules nucléées totales viables) et à droite le rendement CFU (colony forming unit) permettent d'évaluer la fonctionnalité clonogénique. Les conditions testées sont les suivantes : J10 (en fin de culture) ; HP02 (milieu de référence de Maco Pharma) ; SEC standard (HSA0,5%) (milieu SEC tel que décrit dans les exemples dans le tableau 2) ; SEC Mannitol (pauvre en NaCl) (milieu formule 12 composants sans NaCl 0.9% remplacé par un volume identique de mannitol 4.55% [300 mos]) ; SEC Glucose (pauvre en NaCl) (milieu formule 12 composants sans NaCl 0.9% remplacé par un volume identique de solution de glucose 5%) ; SEC HSA 3% (milieu SEC tel que décrit dans les exemples dans le tableau 2 mais avec 3% d'albumine sérique humaine); SEC Poche PVC ((le conteneur est ici une poche d'échantillonnage de 20ml en PVC perméable aux gaz). Les essais ont été réalisés dans des contenants imperméables aux gaz (tubes en polypropylène de 2.5ml de contenance avec 2.5 ml de suspension cellulaire pour éviter au maximum la présence d'air) sauf la poche PVC.

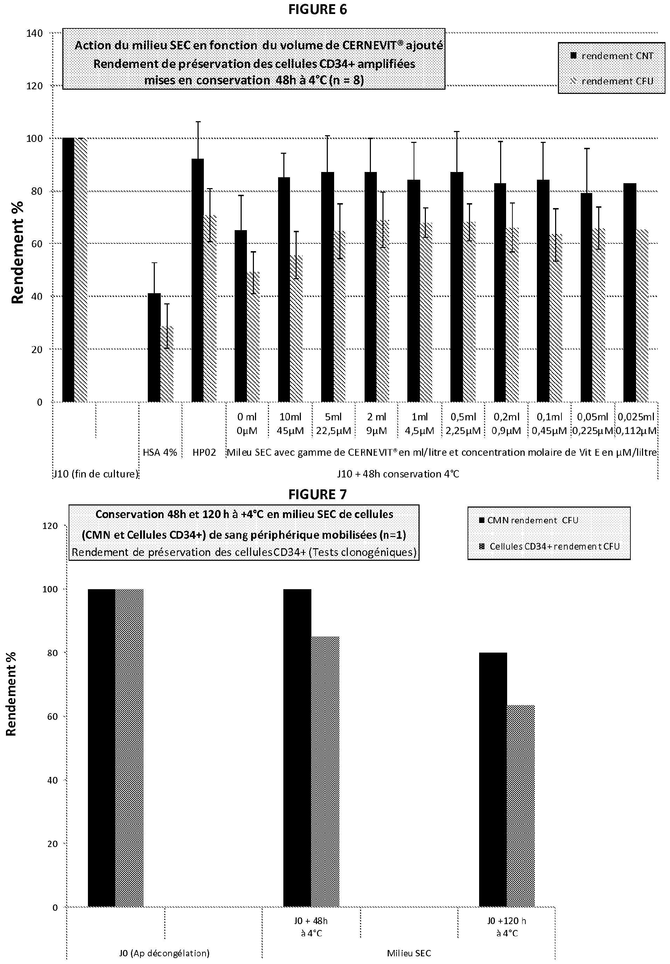

Figure 6. Rendement de préservation des cellules CD34+ de sang placentaire amplifiées mises en conservation 48h à 4°C (n=8) au cours de l'étude d'une gamme de volumes de CERNEVIT ^{®}) (et donc d'une gamme de molarité de vitamine E) ajoutés au milieu SEC « base » constitué des 11 autres composants. Les conditions testées sont les suivantes : Albumine humaine (HSA 4%) ; HPO2 (milieu de référence MACOPHARMA) ; SEC « base » sans CERNEVIT^{®} ; puis SEC « base » supplémenté avec des volumes décroissants de CERNEVIT^{®} à savoir : 10ml/l pour 45µlM de vit E ; 5 ml/l pour 22.5µM de vit E ; 2 ml/l pour 9 µM de vit E; 1ml/l pour 4.5µM de vit E; 0.5ml/l pour 2.25µM de vit E; 0.2ml/l pour 0.9µM de vit E; 0.1ml/l pour 0.45µM de vit E; 0.05ml/l pour 0.225µM de vit E; 0.025ml/l pour 0.112µM de vit E. Les essais ont été réalisés dans des contenants imperméables aux gaz (tubes en polypropylène de 2.5ml de contenance avec 2.5 ml de suspension cellulaire pour éviter au maximum la présence d'air).
Figure 7. Rendement de préservation de la clonogénicité des cellules mononucléées (CMN) et des cellules CD34+ (après sélection immunomagnétique) de sang périphérique mobilisé après 48h et 120h de conservation à 4°C (n=1). Les cellules CMN, après décongélation et élimination du cryoprotecteur sont séparées en 2 aliquotes dont un est remis en suspension en milieu SEC (formulation décrite 12 composants) et l'autre traité par sélection immunomagnétique pour obtenir des cellules CD34+ de pureté supérieure à 80% qui sont mises en suspension dans le même milieu SEC (formulation décrite 12 composants). Les essais ont été réalisés dans des contenants imperméables aux gaz (tubes en polypropylène de 2.5ml de contenance avec 2.5 ml de suspension cellulaire pour éviter au maximum la présence d'air)

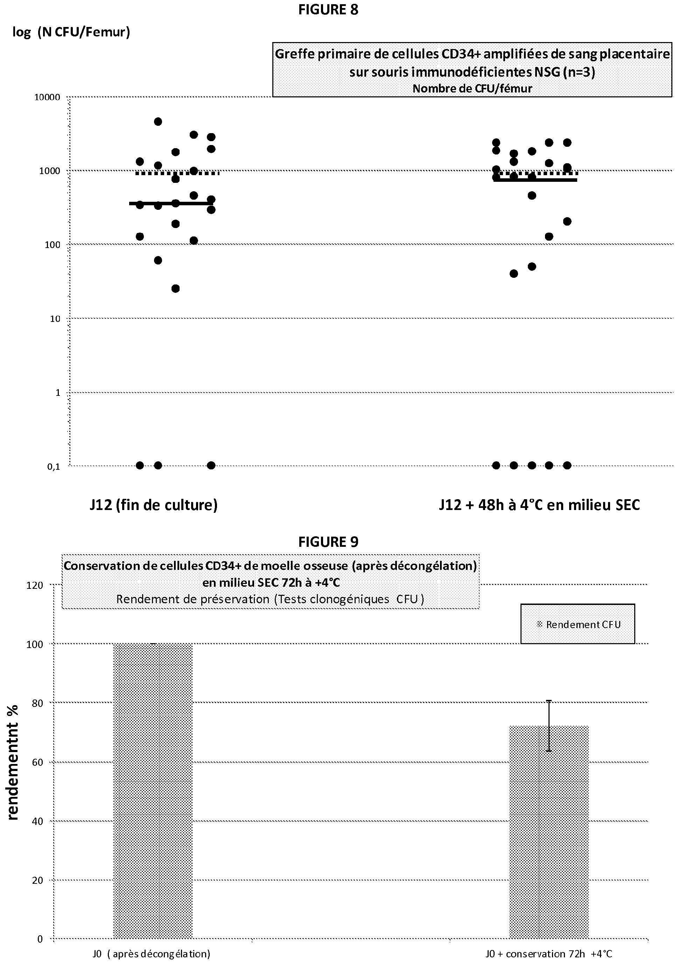

Figure 8. Rendement de préservation de la clonogénicité (CFU) des cellules CD34+ amplifiées après mise en conservation en milieu SEC à +4°C pendant 48h puis greffe primaire chez la souris immunodéficiente NSG. Les manipulations de cette étude consistent en différentes étapes: Production du greffon : mise en culture de cellules CD34+ de sang placentaire (sélectionnées par tri immunomagnétique) dans un milieu contenant un cocktail de cytokines adaptées pour une durée de 12 jours. A la fin de la culture , les cellules amplifiées sont récoltées et divisées en deux: une partie est greffée à un lot de souris immunodéficientes dont chaque souris reçoit une quantité de cellules amplifiées produite par 1000 cellules CD34+ au départ de la culture; l'autre partie est mise en conservation en milieu SEC (poche PVC) à +4°C pendant 48h puis est injectée à un second lot de souris immunodéficientes dans les mêmes conditions quantitatives. 8 semaines après la greffe, les souris sont sacrifiées, les progéniteurs clonogéniques humains sont analysés dans la moelle osseuse des souris: ces progéniteurs sont générés par les cellules souches (légende graphe: 1 point correspond à une souris greffée et analysée (CFU/fémur) ; le trait pointillé correspond à la moyenne ;le trait plein correspond à la médiane).
Figure 9. Rendement de préservation de la clonogénicité des cellules CD34+ (cellules d'intérêt) de moelle osseuse (n=5). Les cellules CD34+ ont été mises en banque en LN2 il y a plusieurs années (de 3 à 6 ans). Après décongélation les cellules CD34+ sont resuspendues en milieu SEC et mises en conservation à 4°C. Après 72h de conservation à +4°C, les tests clonogéniques sont effectuées. Les essais ont été réalisés dans des contenants imperméables aux gaz (tubes en polypropylène de 2.5ml de contenance avec 2.5 ml de suspension cellulaire pour éviter au maximum la présence d'air)

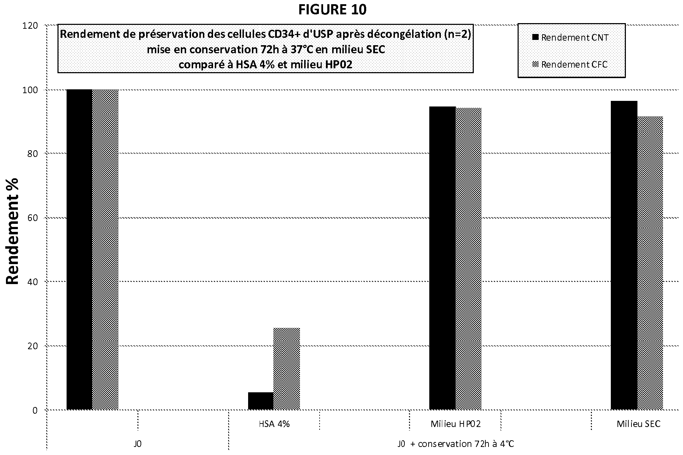

Figure 10. Rendement de préservation de la viabilité et du potentiel clonogénique des cellules CD34+ de sang placentaire. Les cellules CD34+ de sang placentaires sont décongélées et divisées en 3 aliquotes : mise en suspension des cellules CD34+ en milieu SEC, en milieu HP02 et en albumine humaine 4%, puis mise en conservation à 4°C. Après 72h de conservation à +4°C, les analyses (numération des cellules nucléées totales viables et tests fonctionnels clonogéniques) sont effectuées. Les essais ont été réalisés dans des contenants imperméables aux gaz (tubes en polypropylène de 2.5ml de contenance avec 2.5 ml de suspension cellulaire pour éviter au maximum la présence d'air)

### Exemples

Après avoir trouvé un certain nombre de principes actifs dans le Codex, les inventeurs ont choisi des préparations pharmaceutiques injectables qu'ils ont associées et ils ont réalisé une formulation de base qu'ils ont ensuite testée comparativement au milieu de référence HP02 (Macopharma). Ils ont obtenu des résultats de préservation après 48h et 72h de conservation à +4°C pratiquement identiques avec les deux milieux.

Les inventeurs ont donc testé l'intérêt de chaque produit et recherché la concentration optimale utile. Certains composants ont été exclus de la formulation initiale soit du fait de l'absence d'action globale (SeNa), soit du fait d'une possible toxicité rénale reconnue récemment (Hydroxy-ethyl-Starch 6%).

Les inventeurs ont ainsi mis en évidence l'importance des vitamines E (Alpha-Tocophérol) et dans une moindre mesure des vitamines A (Acide Rétinoïque) et C (Acide Ascorbique), des ions K+, Mg++, et du Lactate et de l'albumine humaine sur le maintien de la viabilité et surtout de la fonctionnalité (clonogénicité) des cellules CD34+ amplifiées.

Au final, les composants de 12 préparations pharmaceutiques entrent dans la formulation du milieu biologique de préservation cellulaire. Le milieu de préservation est préparé stérilement dans une poche plastique EVA (Ethylène vinyl acétate) imperméable aux gaz de telle façon que les gaz atmosphériques, en particulier le dioxygène (02), ne puissent pas pénétrer et que surtout le dioxyde de carbone (CO2) dissous au cours de l'ajustage du pH (action de l'acide citrique sur le bicarbonate de Na) reste dans le milieu (favoriserait la préservation des cellules à basse température) ; de ce fait, le pH du milieu demeure à la valeur désirée pendant une durée de plusieurs années. Ces poches sont utilisées dans l'industrie pharmaceutique pour conditionner des préparations injectables et par des fournisseurs de réactifs biologiques pour conserver entre autres des milieux de culture.

Les inventeurs ont nommés ce milieu de préservation SEC.

### Description du milieu de préservation

### Produits injectables utilisés

**Produit C1** : **Albumine humaine** solution à 20% (composition albumine humaine 200gr; acide caprylique qsp 1litre) : elle a un rôle de protection de certaines molécules; elle a montré au cours de nos essais un rôle très net dans le maintien de la viabilité des cellules nucléées totales ; elle permet une meilleure stabilité du pH du milieu formulé dans les contenants non imperméables aux gaz aux cours des conservations des cellules amplifiées à +4°C. (Voir Figure 1)
**Produit C2** : **Acides aminés** (Vaminolact^{®} (Fresenius Kabi) composition qsp 100ml : L-Alanine 630mg; L-Arginine 410mg; Acide L-Aspartique 410mg; L-Cystéine/L Cystine 410mg ; Acide L-Glutamique 710mg ; Glycine 210mg ; L-Histidine 210mg; L-Isoleucine 310mg; L-Leucine 700mg; L-Lysine 560mg; L-Méthionine 130mg; L-Phénylalanine 270mg; L-Proline 560mg; L Serine 380mg ; L-Taurine 30mg ; L-Thréonine 360mg ; L-Tryptophane 140mg ; L-Tyrosine 50mg ; L-Valine 360mg.) Les acides aminés apportent une amélioration non significative à la fonctionnalité des cellules amplifiées mais cependant intéressante d'autant que certains acides aminés peuvent avoir un rôle protecteur sur les cellules. (Voir Figure 3)
**Produit C3** : **KCl** (préparation à 10% dans H₂O) : Il a montré au cours de nos essais une action significative sur la préservation de la fonctionnalité des cellules amplifiées. (Voir Figure 3)
**Produit C4** : **Glucose** (préparation à 30%) : Il a montré au cours de nos essais une action non significative mais intéressante. (Voir Figure 3)
**Produit C5** : **Acide aminé Glutamine** (Dipeptiven Composition (Fresenius Kabi) : Alanyl-Glutamine 20g/100ml soit 13.2g de Glutamine /100ml ; molécule stable versus glutamine) : il a montré au cours de nos essais une action non significative mais intéressante ; il aurait une action protectrice sur les mitochondries. (Voir Figure 3)
**Produit C6** : **MgSO4** (préparation à 15% dans H₂O) Il a montré au cours de nos essais une action significative sur la préservation de la fonctionnalité des cellules amplifiées; il aurait un rôle au niveau des mitochondries. (Voir Figure 4)
**Produits C7** : **Anti-oxydants**
Soit C7.Cernevit ^{®} (Baxter) (Composition pour 5ml : Rétinol [Vitamine A] 3500 UI sous forme de palmitate de rétinol ; Cholécalciférol [Vitamine D3] 220 UI; Alpha-tocophérol ou [Vitamine E] 11,2 UI soit 10,2mg ; Acide ascorbique [Vitamine C] 125mg ; Thiamine [Vitamine B1] 3,51mg; Riboflavine [Vitamine B2] 4,14 mg); Pyridoxine [Vitamine B6] 4,53mg; Cyanocobalamine [vitamine B12] 0,006mg ; Acide folique [Vitamine B9] ; Acide pantothénique [Vitamine B5] 17,15mg ; Biotine [Vitamine B8] 0,069mg ; Nicotinamide [Vitamine PP] 46mg) : Elle a montré au cours de nos essais une action préservatrice de la fonctionnalité des cellules mises en conservation à + 4C ; Parmi les vitamines testés séparément, la vitamine E présente l'action la plus importante ; les vitamines A et C présentent une activité inférieure, mais la vitamine C est décrite pour avoir un rôle protecteur de la vitamine E ; l'ajout de Cernevit^{®} au surnageant de culture a montré un effet identique au milieu formulé dans la préservation des cellules amplifiées à +4°C. Enfin chaque vitamine existe sous forme de médicament injectable et seules les vitamines E et C pourraient être utilisées dans la formulation.
**Soit C7a.Vitamine E** (composition pour 2ml : Alpha-tocophérol 100mg)
**Soit C7b.Vitamine C** (composition pour 5ml : Acide Ascorbique 1000mg)
**Soit C7c.Vitamine A** (composition pour 2ml : Rétinol 100000 UI)
La vitamine E peut être utilisée seule ou associée à la vitamine C ou A ou la combinaison des deux avec un effet proche ou identique en termes de préservation des cellules amplifiées à celle du Cernevit^{®}. La vitamine C protègerait la vitamine E. (Voir Figure 1, Figure3 et Figure 6)
**Produit C8** : **Mannitol** (Solution à 20%) : il a un rôle antioxydant (anti-radical hydroxyle) et a montré au cours de nos essais une action non significative.. (Voir Figure 4)
**Produit C9** : **Ringer Lactate** (composition : NaCl 6gr ; KCl 0,4gr ; CaCl₂ 2H₂O 0,27gr ;lactate de Na 5,16gr qsp llitre soit Na⁺ 131mmol ;K⁺ 5mmol ;Ca⁺⁺ ;Lactate 29mmol.) Il a un rôle antioxydant mineur, un petit rôle tampon (idem ion CO3 ⁻⁻) est présent dans le surnageant de culture ; il a montré au cours de nos essais une action relativement significative sur la préservation de la fonctionnalité des cellules amplifiées. (Voir Figure 3)
**Produit C10 : NaCl** (sous forme de sérum physiologique à 0.9%) : il a un rôle de soluté et permet de maintenir une osmolarité physiologique. Il a montré au cours de nos essais un intérêt particulier sur le potentiel clonogénique car s'il est remplacé par un soluté isotonique de glucose ou de mannitol, on observe, après 48h de conservation à +4°C, une chute très importante de la fonctionnalité clonogénique malgré le maintien de la viabilité des cellules nucléées totales. (Voir Figure 5)
**Produit C11: Bicarbonate de sodium** (préparation NaHCO₃ à 1.4%) Il permet de créer un pseudo système tampon avec l'acide citrique de l'ACD A pour ajuster le pH du milieu à la valeur désirée et apporter du CO₂ dissous (action protectrice sur les cellules d'intérêt à +4°C).
**Produit C12** : **ACD** A (Acide citrique Citrate Dextrose solution A) (Dextrose monohydrate 24.5g ; Acide citrique monohydrate 8gr ; citrate de sodium dihydraté 22gr qsp 1 litre). Il permet d'ajuster le pH après ajout de bicarbonate de sodium ; l'ion citrate est décrit comme présentant une action anti-oxydante et enfin l'ion citrate complexe une partie des ions calcium introduits dans le milieu avec le Ringer Lactate. L'ACD A est un anticoagulant classiquement utilisé en pratique transfusionnelle.
Le tableau ci-dessous donne la formulation actuelle avec les valeurs hautes et basses intéressantes et actives des composants mises en évidence au cours des études d'optimisation. Les composants suivants n'ont pas été étudiés pour une optimisation et seules les valeurs physiologiques ont été prises en compte : KCl (0.33gr/l final en associant KCL 10% et KCl contenu dans le Ringer Lactate), Glucose, NaCl, ACD A.

Le pH de la solution de conservation préférée est 6,95 ± 0.05.

**Tableau 2**

| | **Volume en ml pour 1 litre de milieu** | | | **poids en Gr de la ou des molécules d'intérêt pour 1 litre de milieu** | | |
|---|---|---|---|---|---|---|
| **Composants: préparations de préservation injectables** | **valeur actuelle** | **Valeur haute** | **Valeur basse** | **valeur actuelle** | **Valeur haute** | **Valeur basse** |
| **C1. Albumine humaine 20%** | 75 | 200 | 25 | 15 | 40 | 5 |
| **C2. AA (Vaminolact)** | 30 | 50 | 20 | 1,959 | 3,265 | 1,306 |
| **C3. KCl 10%** | 2,74 | 2.74 | 2.74 | 0,274 | 0,33 | 0,33 |
| **C4. Glucose 30%** | 3,32 | 3,32 | 3,32 | 1 | 1 | 1 |
| **C5**. **Glutamine (Dipeptiven)** | 5,3 | 5,3 | 2,65 | 0,7 | 0,7 | 0,35 |
| **C6. MgSO4 15%** | 0,68 | 16 | 0,34 | 0,1 | 2,35 | 0,05 |
| **C7. Polyvit (Cernevit)** | 2 | 4 | 0,0125 | Vit E: 0,00408 Vit C: 0,05 Vit A: 0,00042 | Vit E: 0,00816 Vit C: 0,1 Vit A: 0,00084 | Vit E: 0,0000255 Vit C: 0,0003125 Vit A: 0,0000026 |
| **C8. Mannitol 20%** | 25 | 100 | 25 | 5 | 20 | 5 |
| **C9. Ringer Lactate** | 140 | 513 | 46,7 | Lact de Na: 0,722 KCI: 0,056 | Lact de Na: 2,647 KCI: 0,205 | Lact de Na: 0,24 KCI: 0,0187 |
| **C10. NaCl 0,9%** | 676,46 | Soluté ND | soluté ND | 6,09 | ND | ND |
| **C11. NaHC03 1,4%** | 37 | 295 | 18,5 | 0,518 | 4,14 | 0,259 |
| **C12. ACD A qsp ph 6,95 ± 0,05** | environ 2,5 | ND | ND | ND | ND | ND |

### Tests de l'action des composants du milieu de préservation

### 1. Sur les cellules de sang placentaire CD34+ sélectionnées puis amplifiées ex vivo.

Les cellules, après expansion ex vivo, sont plus fragiles que les cellules CD34+ originelles et leur maintien est le plus critique à +4°C (Duchez et al, 2013, *supra).*

Pendant l'ensemble des études ayant conduit à la formulation du milieu biologique de préservation, les tests ont été effectués sur des cellules CD34+ de sang placentaire issues d'une banque stockées à - 196°C. Chaque essai a été effectué sur 1 ou plusieurs échantillons.

Les cellules CD34+ de sang placentaire sont isolées par un système immuno-magnétique, puis elles sont congelées et mise en banque à -196°C.

Après décongélation, les cellules CD34+ de sang placentaire (20000/ml) sont mises en culture en milieu HP01 en présence de SCF (Stem Cell Factor) 100ng/ml, Flt3 (FMS-like tyrosine kinase-3) 100ng/ml, G-CSF (Granulocyte Colony Stimulating Factor) 10 ng/ml et thrombopïétine (TPO) 20ng/ml à 37°C, 5% CO2 et 85% d'humidité. A mi-culture, un ajout de milieu de culture HP01 avec les cytokines (dilution au 1/5) est réalisé et la culture prolongée jusqu'à 9 à 12 jours (en général 10jours).

A la fin de la culture, 2,5 ml de suspension cellulaire sont transférées dans des tubes de 2,5 ml de contenance en polypropylène imperméable aux gaz, puis centrifugées à 430g pendant 10 minutes à 18°C. Le surnageant est enlevé dans sa totalité (reste environ 50µl de surnageant de culture sur le culot cellulaire). Ensuite, 2,45 ml du milieu de préservation à tester (à température ambiante) sont ajoutés dans le tube, puis le tube est fermé par le bouchon et les cellules sont remises en suspension par retournements successifs. Les échantillons sont ensuite laissés à température ambiante pendant 1 à 3 heures. Enfin, les tubes sont placés à plat à +4°C pour des durées en général de 48h à 72h. Des essais ont également été réalisés en poches PVC perméables aux gaz pour des études comparatives et dans des poches en EVA imperméables aux gaz.

Des analyses sont alors réalisées sur les cellules amplifiées : numération et viabilité des CNT (Cellules Nucléées Totales) et tests clonogéniques, avec parfois numération et viabilité des cellules CD34+. Après le passage à +4°C pendant les durées qui ont été définies (48h et 72h), les échantillons cellulaires sont testés : numération et viabilité des CNT et tests clonogéniques (parfois également numération et viabilité des cellules CD34+).

La quantité de cellules nucléées totales viables restantes après conservation à 4°C est comparée à la quantité des cellules nucléées totales viables en fin de culture, ce qui permet d'avoir un rendement de récupération de cellules viables. De même, un calcul de rendement des CFC (Colony Forming Cells) est réalisé. Les valeurs obtenues ont permis d'évaluer l'intérêt d'un ou plusieurs composés dans la formulation puis de rechercher la concentration optimale de ces composés. Les valeurs ont été comparées à celles obtenues avec le milieu de préservation HP02 (Duchez et al, 2013, *supra*)*.*

Les résultats sont présentés dans la Figure 1.

Les cellules CD34+ de sang placentaires amplifiées ex vivo ont été greffées sur des souris immunodéprimées NSG pour étudier la préservation de la clonogénicité des cellules CD34+ amplifiées après mise en conservation en milieu SEC à +4°C pendant 48h. Les manipulations de cette étude consistent en différentes étapes: Production du greffon avec mise en culture de cellules CD34+ de sang placentaire (sélectionnées par tri immunomagnétique) dans un milieu contenant un cocktail de cytokines adaptées pour une durée de 12 jours. A la fin de la culture, les cellules amplifiées sont récoltées et divisées en deux: une partie est greffée à un lot de souris immunodéficientes dont chaque souris reçoit une quantité de cellules amplifiées produite par 1000 cellules CD34+ au départ de la culture; l'autre partie est mise en conservation en milieu SEC (poche PVC) à +4°C pendant 48h puis est injectée à un second lot de souris immunodéficientes dans les mêmes conditions quantitatives. 8 semaines après la greffe, les souris sont sacrifiées, les progéniteurs clonogéniques humains sont analysés dans la moelle osseuse des souris: ces progéniteurs sont générés par les cellules souches (légende graphe: 1 point correspond à une souris greffée et analysée (CFU/fémur) ; le trait pointillé correspond à la moyenne ; le trait plein correspond à la médiane). Les résultats montrent que la conservation en milieu SEC pendant 48h à 4°C n'altère pas le nombre de progéniteurs clonogéniques issues des cellules souches greffées aux souris.

Les résultats sont présentés dans la figure 8.

### 2. Sur les cellules de sang placentaire après prélèvement

Le sang placentaire est prélevé dans une poche plastique (PVC poly-vinyl-chlorure) contenant 23 ml d'anticoagulant CPD (Citrate phosphate dextrose). L'unité de sang placentaire est ensuite placée à +4°C dans l'attente de son traitement pour la mise en banque (cryopréservation à -196°C). Le protocole demande que la mise en banque soit réalisée dans les 36 heures pour éviter les altérations cellulaires liées au mode de conservation (+4°C) et à l'absence de milieu de préservation. Pour permettre des prélèvements très éloignés pouvant répondre à des intérêts thérapeutiques (compatibilité tissulaire, phénotypes HLA rares, populations des DOM-TOM, etc...) et demandant des délais d'acheminement supérieurs à 36h, un premier travail d'amélioration de la conservation d'unité de sang placentaire après prélèvement a été réalisé. Il a consisté à associer une poche imperméable aux gaz et l'ajout de milieu non injectable (HP02 de Macopharma) à une unité de sang placentaire. Cela a permis d'améliorer significativement le délai avant mise en banque (jusqu'à 72h) tout en conservant une viabilité et une fonctionnalité compatible avec une greffe efficace (WO 2014/057220, Chevaleyre et al, 2014, Stem Cells Dev, 23, 1820-30).

Le milieu HP02, n'étant pas injectable, le milieu SEC (selon la présente invention) a été utilisé pour préserver les Unités de sang placentaires. Après 72h de conservation à +4°C, l'ajout de milieu SEC a permis de maintenir une fonctionnalité significativement meilleure et compatible avec une mise en banque (Rodriguez, Mémoire de Master 2, Université de Bordeaux, soutenu le 11 juin 2014). Les résultats obtenus sont montrés Figure 2.

### 3. Sur les cellules CD34+ sélectionnées de sang placentaire après décongélation.

Les cellules CD34+ de sang placentaires congelées à -196°C sont décongelées, lavées et divisées en 3 aliquotes : mise en suspension des cellules CD34+ en milieu SEC, en milieu HP02 et en albumine humaine 4%, puis mise en conservation à 4°C. Après 72h de conservation à +4°C, les analyses (numération des cellules nucléées totales viables et tests fonctionnels clonogéniques) sont réalisées. Les essais ont été réalisés dans des contenants imperméables aux gaz (tubes en polypropylène de 2,5ml de contenance avec 2,5 ml de suspension cellulaire pour éviter au maximum la présence d'air). Les résultats montrent une très bonne préservation des cellules CD34+ quantitativement (nombre de cellules viables) et qualitativement (fonctionnalité clonogénique) après conservation de 72h à +4°C en milieu SEC comparé au milieu HP02. Les résultats obtenus sont montrés Figure 10.

### 4. Sur les cellules CD34+ de moelle osseuse après décongélation (n=5)

Les cellules CD34+ médullaires mise en banque (congélation à -196°C depuis 3 à 6 ans), sont décongelées, lavées et remise en suspension dans 2,5ml de milieu SEC en tube de 2,5ml en polypropylène imperméable aux gaz ; elles sont mises en conservation à +4°C pendant 72h. Les tests clonogéniques effectués après décongélation et après conservation 72h à 4°C montre une bonne préservation de la fonctionnalité de ces cellules médullaires d'intérêt (rendement de préservation de la fonctionnalité > à 70%). Les résultats obtenus sont montrés Figure 9.

### 5. Sur les cellules de sang périphérique mobilisé après décongélation (n=1)

Les cellules de sang périphériques après passage sur gradient de Ficoll (CMN) ont été congelées à -196°C. Après décongélation et lavage, elles sont séparées en 2 aliquotes : le premier est laissé tel quel et le second subit une séparation immunomagnétique qui va permettre d'obtenir une suspension de cellules CD34+. Les cellules CMN et les cellules CD34+ sont mises en suspension en milieu SEC (2,5ml) dans des tubes de 2,5ml en polypropylène imperméables aux gaz puis mises en conservation à + 4°C de 48 à 120h. Les tests clonogéniques effectués après décongélation des CMN et/ou purification des cellules CD34+ puis après conservation à 4°C montrent une bonne préservation de la fonctionnalité de ces cellules d'intérêt : rendement de préservation de la fonctionnalité de 85% (cellules CD34+ purifiées) à 100 % (CMN) après 48h à +4°C et de 60% (cellules CD34+ purifiées) à 80% (CMN) après 120h à 4°C. Les résultats obtenus sont montrés Figure 7.

## Revendications

1. Utilisation d'une solution injectable pour conserver des cellules du sang placentaire, de la moelle osseuse et du sang périphérique, ladite solution injectable comprenant une solution physiologique de chlorure de sodium, du chlorure de potassium, du sulfate de magnésium, du bicarbonate de sodium, de la vitamine E, de la vitamine A, de la vitamine C, du lactate, et de l'albumine humaine et étant adaptée pour que les cellules à conserver puissent être transplantées à un patient sans rinçage préalable.

2. Utilisation selon la revendication 1, dans laquelle la solution injectable comprend au minimum 5 g/l d'albumine humaine et au minimum 0,000025 g/l de vitamine E et/ou au minimum 0,0000026 g/l de vitamine A.

3. Utilisation selon l'une quelconque des revendications 1-2, dans laquelle la solution injectable comprend au minimum 0,0003 g/l de vitamine C.

4. Utilisation selon l'une quelconque des revendications 1-3, dans laquelle la solution injectable comprend en outre un ou plusieurs éléments choisis parmi des acides aminés dont la glutamine, du glucose, du mannitol et de l'acide citrique.

5. Utilisation selon l'une quelconque des revendications 1-4, dans laquelle la solution injectable comprend une solution physiologique de chlorure de sodium, de l'albumine humaine, des vitamines E, C et A, des acides aminés dont la glutamine, des ions potassium et magnésium, du glucose, du mannitol, du lactate, du bicarbonate de sodium et de l'acide citrique.

6. Utilisation selon l'une quelconque des revendications 1 à 5, **caractérisée en ce qu'**elle est réalisée en condition d'hypothermie modérée, notamment à 4 °C.

7. Méthode de conservation des cellules du sang placentaire, de la moelle osseuse et du sang périphérique, comprenant la mise en contact des cellules du sang placentaire, de la moelle osseuse et du sang périphérique avec la solution injectable telle que définie dans l'une quelconque des revendications 1-5.

8. Utilisation selon l'une quelconque des revendications 1 à 5 ou méthode selon la revendication 7, **caractérisée en ce que** les cellules comprennent des cellules CD34⁺.

## Patentansprüche

1. Verwendung einer injizierbaren Lösung zur Konservierung von Plazentablut-, Knochenmark- und peripheren Blut-Zellen, wobei die injizierbare Lösung eine physiologische Lösung von Natriumchlorid, Kaliumchlorid, Magnesiumsulfat, Natriumbicarbonat, Vitamin E, Vitamin A, Vitamin C, Lactat und Humanalbumin umfasst und so angepasst ist, dass die zu konservierenden Zellen ohne vorheriges Spülen in einen Patienten transplantiert werden können.

2. Verwendung nach Anspruch 1, wobei die injizierbare Lösung mindestens 5 g/l Humanalbumin und mindestens 0,000025 g/l Vitamin E und/oder mindestens 0,0000026 g/l Vitamin A umfasst.

3. Verwendung nach einem der Ansprüche 1-2, wobei die injizierbare Lösung mindestens 0,0003 g/l Vitamin C umfasst.

4. Verwendung nach einem der Ansprüche 1-3, wobei die injizierbare Lösung ferner ein oder mehrere Elemente umfasst, ausgewählt aus Aminosäuren, einschließlich Glutamin, Glucose, Mannitol und Zitronensäure

5. Verwendung nach einem der Ansprüche 1-4, wobei die injizierbare Lösung eine physiologische Lösung von Natriumchlorid, Humanalbumin, Vitamin E, C und A, Aminosäuren einschließlich Glutamin, Kalium- und Magnesiumionen, Glucose, Mannitol, Lactat, Natriumbicarbonat und Zitronensäure umfasst.

6. Verwendung nach einem der Ansprüche 1 bis 5, **dadurch gekennzeichnet, dass** sie unter Bedingungen mäßiger Hypothermie, insbesondere bei 4°C, durchgeführt wird.

7. Verfahren zum Konservieren von Plazentablut-, Knochenmark- und peripheren Blut-Zellen, umfassend das Inkontaktbringen der des Plazentabluts, des Knochenmarks und des peripheren Bluts mit der injizierbaren Lösung, wie in einem der Ansprüche 1-5 definiert.

8. Verwendung nach einem der Ansprüche 1 bis 5 oder Verfahren nach Anspruch 7, **dadurch gekennzeichnet, dass** die Zellen CD34⁺-Zellen umfassen.

## Claims

1. Use of an injectable solution for preserving cells from placental blood, bone marrow and peripheral blood, said injectable solution comprising a physiological solution of sodium chloride, potassium chloride, magnesium sulfate, sodium bicarbonate, vitamin E, vitamin A, vitamin C, lactate, and human albumin and being adapted so that the cells to be preserved can be transplanted to a patient without prior rinsing.

2. Use according to claim 1, wherein the injectable solution comprises at least 5 g/l of human albumin and at least 0.000025 g/l of vitamin E and/or at least 0.0000026 g/l of vitamin A.

3. Use according to any one of claims 1-2, wherein the injectable solution comprises at least 0.0003 g/l vitamin C.

4. Use according to any one of claims 1-3, wherein the injectable solution further comprises one or more components selected from amino acids including glutamine, glucose, mannitol and citric acid.

5. Use according to any one of claims 1-4, wherein the injectable solution comprises a physiological solution of sodium chloride, human albumin, vitamins E, C and A, amino acids including glutamine, potassium and magnesium ions, glucose, mannitol, lactate, sodium bicarbonate and citric acid.

6. Use according to any one of claims 1 to 5, **characterized in that** it is carried out under moderate hypothermic conditions, in particular at 4°C.

7. A method of preserving cells of placental blood, bone marrow and peripheral blood, comprising contacting the cells of placental blood, bone marrow and peripheral blood with the injectable solution as defined in any one of claims 1-5.

8. Use according to any one of claims 1-5 or the method according to claim 7, wherein the cells comprise CD34+ cells.
